Europäisches Patentamt

European Patent Office

Office européen des brevets

(19)

(11) Veröffentlichungsnummer: **0 053 383 B2**

(12) # NEUE EUROPÄISCHE PATENTSCHRIFT

(45) Veröffentlichungstag der neuen Patentschrift:
27.12.91 Patentblatt 91/52

(51) Int. Cl.$^5$: **H02J 3/14**, G05D 23/19

(21) Anmeldenummer: 81109988.6

(22) Anmeldetag: 28.11.81

(54) **Verfahren zur rechnergesteuerten Überwachung des Gesamtstromverbrauches einer Gruppe von Stromverbrauchern.**

(30) Priorität: 28.11.80 DE 3045023

(43) Veröffentlichungstag der Anmeldung:
09.06.82 Patentblatt 82/23

(45) Bekanntmachung des Hinweises auf die
Patenterteilung:
05.06.85 Patentblatt 85/23

(45) Bekanntmachung des Hinweises auf die
Entscheidung über den Einspruch:
27.12.91 Patentblatt 91/52

(84) Benannte Vertragsstaaten:
CH DE FR GB LI

(56) Entgegenhaltungen:
DE-A- 2 315 208
DE-A- 2 419 663
FR-A- 2 433 254
US-A- 4 090 062
US-A- 4 216 384

(73) Patentinhaber: Schmidt, Gerda
Spalatinstrasse 42
W-8000 München 83 (DE)

(72) Erfinder: Schmidt, Gerda
Spalatinstrasse 42
W-8000 München 83 (DE)

(74) Vertreter: Pätzold, Herbert, Dr.
Steubstrasse 10
W-8032 Gräfelfing-München (DE)

EP 0 053 383 B2

Jouve, 18, rue Saint-Denis, 75001 PARIS

## Beschreibung

Die Erfindung betrifft ein Verfahren zur rechnergesteuerten Überwachung des auf eine einstellbare maximale Grenzleistung beschränkten Gesamtstromverbrauches einer Gruppe von an ein Stromnetz angeschlossenen einzelnen Stromverbrauchern, von denen wenigstens einige vorübergehend abschaltbar oder auf verringerte Leistungsentnahme umsteuerbar sind, wobei zur Begrenzung der Gesamtleistungsaufnahme der Stromverbrauchergruppe auf einen Wert unterhalb der Grenzleistung die jeweils vorhandene Leistungsaufnahme der einzelnen Stromverbraucher periodisch gemessen und die Summe der gemessenen Leistungsaufnahmen mit der Grenzleistung verglichen wird und wobei ein den Grenzwert übersteigender oder wesentlich unterschreitender Gesamtstromverbrauch durch Ab- oder Zuschaltung oder leistungsverringernde bzw. leistungserhöhende Umsteuerung eines oder mehrerer ausgewählter Stromverbraucher möglichst nahe an die Grenzleistung herangeführt wird und wobei die Stromverbraucher jeweils über einem Ein/Ausschaltes an das Stromnetz angeschlossen sind.

In vielen Bereichen der privaten und öffentlichen Wirtschaft bilden mehrere Stromverbraucher, von denen z. B. einzelne im Dauerbetrieb sind während andere nur sporadisch in Betrieb genommen und zyklisch geregelt oder auf andere Weise gesteuert werden, eine Verbrauchergruppe, für die nach einem gemeinsamen Stromtarif abgerechnet wird.

Unter Stromverbraucher werden hier jegliche Art von stromverbrauchenden Geräten, Apparaten, Maschinen, elektrischen Einrichtungen etc. verstanden.

Bei einer Verbrauchergruppe handelt es sich z. B. um Geräte, Apparate und/oder Maschinen einer technischen Einrichtung oder Anlage beispielsweise einer Großküche.

Zyklisch regelbare Stromverbraucher können z. B. thermostatisiert sein. Hierbei kann es sich ohne jede Beschränkung um Elektroherde, Elektroöfen, elektrisch betriebene Konvektoren, Heiz- oder Kühlaggregate und dergleichen Geräte oder Apparate handeln.

Es gibt auch auf die verschiedenste Weise gesteuerte Stromverbraucher beispielsweise Motoren, deren Leistungsaufnahme steuerbar ist. So können z. B. Antriebsmotoren für Förderbänder von einer höhreren auf eine niedrigere Bandgeschwindigkeit und umgekehrt umschaltbar sein. Auch können z. B. Heiz- und Kühlgeräte auf verschiedene Leistungsstufen umsteuerbar sein.

Zyklisch geregelte Stromverbraucher können zyklisch unterbrochen oder zyklisch auf eine Stufe mit veränderter Leistungsaufnahme umgessteuert werden. Während der Unterbrechungszeit wird von dem betreffenden Stromverbraucher kein Strom verbraucht. Die unterbrechbaren und/oder auf veränderte Leistungsaufnahme umsteuerbaren Stromverbraucher einer Stromverbrauchergruppe lassen sich in einer solchen Weise regeln bzw. steuern, daß durch die gewählte Unterbrechungs- bzw. Umsteuerzeitspanne mit veränderter Leistungsaufnahme die Funktionen der betreffenden Stromverbraucher sich nicht wesentlich ändern.

Durch die EP-A1-00 15 666 ist ein Verfahren der eingangs genannten Art bekannt, bei dem in bestimmten Zeitabständen die Leistungsaufnahmen der verschiedenen Stromverbraucher gemessen und aufaddiert werden. Wenn der Gesamtstromverbrauch die maximale Grenzleistung überstiegen hat, werden Signale zu Unterbrecherschaltern abgegeben, die nach einem vorgegebenen Programm den Gesamtstromverbrauch senken, und zwar wird entweder ein Stromverbraucher abgeschaltet oder der Stromverbrauch aller Stromverbraucher wird begrenzt.

Wenn auf diese Weise der Gesamtstromverbrauch unter die Grenzleistung gedrückt worden ist, wird periodisch abgefragt, ob der abgeschaltete Stromverbraucher wieder zugeschaltet werden kann bzw. der Stromverbrauch der Verbraucher wieder erhöht werden kann, ohne die Grenzleistung zu überschreiten. Sind mehrere Stromverbraucher abgeschaltet, so wird nach einer Prioritätenliste derjenige Stromverbraucher als nächster zurückgeschaltet, der nach der Liste an erster Stelle steht. Der Stromverbrauch sämtlicher Stromverbraucher wird also periodisch gemessen. Übersteigt bei einer Messung der Gesamtstromverbrauch die maximale Grenzleistung, so wird z. B. ein Stromverbraucher abgeschaltet. Bei der nächsten Messung wird ein weiterer Stromverbraucher abgeschaltet usw., falls der Gesamtstromverbrauch die maximale Grenzleistung noch nicht unterschritten hat. Auf diese Weise werden die Stromverbraucher nach einem bestimmten Programm bzw. nach einer vorbestimmten Reihenfolge nacheinander abgeschaltet, bis der Gesamtstromverbrauch die Grenzleistung ausreichend unterschreitet. Entsprechend wird die erneute Zuschaltung der vorher abgeschalteten Verbraucher vorgenommen, bis der Gesamtstromverbrauch die Grenzleistung wieder überschreitet. Je nach der Größe des Abfragezeitintervalles pendelt damit der Gesamtstromverbrauch mehr oder weniger stark oberhald und unterhalb der Grenzleistung, ohne daß der Rechner erkennen kann, ob bei der nächsten Zuschaltung eine Überschreitung der Grenzleistung erfolgt oder nich bzw. ob bei der nächsten Abschaltung eine Unterschreitung der Grenzleistung auch tatsächlich erzielt wird.

Die bekannte Steuerung zur Überwachung der Grenzleistung weist damit den Nachteil auf, daß Stromverbraucher, die einen zyklisch geregelten internen Steuerkreis aufweisen, wie z. B. thermostatgesteuerte Stromverbraucher, unabhängig von ihrem jeweiligen Schalt- und Betriebszustand zu- oder abgeschaltet werden. So wird z. B. ein Wärmegerät, dessen Thermostat den Stromanschluß des Wärmegerätes gerade unterbricht, also momentan gar keinen Stromverbraucht, von der bekannten Steuerung abgeschaltet, weil der Rechner nicht erkennt, daß durch die Abschaltung dieses Wärmegerätes zu dem betreffenden Zeitpunkt der Gesamtstromverbrauch gar nicht gesenkt wird. Die Abschaltung führt also in diesem Fall zu keinem Ergebnis. Je größer die Anzahl der thermostatgesteuerten Geräte ist, um so größer ist damit auch die Wahrsheinlichkeit, daß während der Abfragezyklen nach der jeweiligen Größe des Gesamtstromverbrauches Geräte abgeschaltet werden, die gerade auch intern abgeschaltet sind.

Je nach dem internen Steuerzyklus eines thermostatgesteuerten Gerätes besteht nach der EP-A1-00 15 666 somit die Möglichkeit, daß ein Gerät, das sich gerade im internen Aus-Zustand befindet, aud dem Stromverbraucherkreis unnötigerweise abgeschaltet und anschließend wieder zugeschaltet wird, obwohl es sich immer noch im internen Aus-Zustand befindet. Sowohl das Abschalten wie das nachfolgende Zuschalten bleibt im Beispielsfalle ohne Einfluß auf die Größe des Gesamtstromverbrauches, so daß die zugehörigen Abfragezyklen zur Angleichung des Gesamtstromverbrauches an die gewählte maximale Grenzleistung umsonst waren und erst erneute Abfragezyklen mit erneuten Geräteab- bzw. Gerätezuschaltungen vorgenommen werden müssen, die dann gegebenenfalls mit mehr Erfolg eine Stromverbrauchsglättung bewirken.

Die bekannte Steuerung ist danach für eine Verbrauchergruppe wenig geeignet, die eine größere Anzahl von Aggregaten mit internen Regel- bzw. Steuerkreisen umfaßt, die sich intern vom Strom vorübergehend abschalten. Selbst wenn die Aggregate extern prioritätsorientiert ab- bzw. zugeschaltet werden, so läßt sich in das zugehörige Prioritätsschema für sämtliche Aggregate der Verbrauchergruppe nicht auch der durch einen internen Regel- bzw. Steuerkreis eines Aggregates bedingte interne Schalt- und Betriebszustand aufnehmen, denn der Zeitpunkt, wann und wie lange ein solcher internen Kreis das zugehörige Aggregat vom Stromnetz intern abschaltet, läßt sich nicht in ein Rechenprogramm einlesen, das zur Festlegung der jedem Aggregat der Stromverbrauchergruppe zugeordneten Prioritätsziffer die festliegenden physikalischen Daten der Aggregate als solche und im Vergleich mit anderen enthält.

Durch die DE-A-2 419 663 wird eine Einrichtung zur Koordination und Begrenzung des Gesamtbedarfes an elektrischer Energie von mehreren Stromverbrauchern offenbart. Der Gesamtanschlußwert der Anlage soll aus wirtschaftlichen und energiepolitischen Gründen so klein wie möglich gehalten werden. Dabei wird die Forderung gestellt, daß die Änderung pro Zeiteinheit der Belastung des Netzes durch die Stromverbraucher einen vorgeschriebenen Wert nicht überschreitet, um Schwierigkeiten bei der Regelung des Netzes zu vermeiden. Durch entsprechende Koordination unter den einzelnen Stromverbrauchern soll der Gesamtanschlußwert kleiner gehalten werden als die Summe der Anschlußwerte der einzelnen Energieverbraucher. Außerdem soll der Gesamtanschlußwert durch den Netzbetreiber über eine Fernsteuerung veränderbar sein. Hierzu ist ein Rechner vorgesehen, der sowohl eine über eine bestimmte maximal zulässige Änderungsgeschwindigkeit hinausgehende Leistungszu- oder -abnahme auf zulässige Werte begrentz, als auch eine die maximal zulässige Gesamtanschlußleistung der Stromverbraucher übersteigende Leistungsaufnahme in einer bestimmten Weise vermindert. Hierzu errechnet der Rechner aus der effektiven Leistungssumme die Leistungen der einzelnen Verbraucher. Ist die Leistungssumme zu hoch oder geht die Zunahme bzw. Abnahme der effektiven Leistungssumme zu rasch vor sich, dann bestimmt der Rechner für jeden Energieverbraucher mit verschiedenen Bedarfslestungen bestimmte Teillast-Abschaltzeiten, damit die momentane Gesamtleistung aller Stromverbraucher keine unzulässigen Schwankungen aufweist. Für die vom Rechner bestimmten zeitweisen Teillastabwürfe eines Verbrauchers sind dabei eine Gruppe von Grenzlastschaltern erforderlich, von denen je ein Schalter einem Verbraucher zugeordnet ist. Der Rechner bestimmt also eine von den einzelnen Verbrauchern zeitweise abzugebende bestimmte Teillast, und die einzelnen Grenzlastschalter nehmen den jeweils fest eingestellten zeitweisen Teillastabwurf der Verbraucher vor. Auf diese Weise kann der Verbraucher dem Netzbetreiber garantieren, daß er keine Spitzenleistungswerte benötigt und Leistungssteigerungen, sowie Leistungsabfälle in vorbestimmter Weise nur relativ langsam vornimmt. Nachteilig ist dabei, daß durch den zwangsweisen Teillastabwurf der Stromverbraucher diese in ihrer Funktion beeinflußt werden, was aber in vielen Anwendungsfällen nicht zulässig ist. Soll die Höhe des Teillastabwurfes geändert werden, so ist außerdem eine entsprechende Änderung des Lastschutzes erforderlich. Nach der DE-A-2 419 663 ist es also nicht möglich, die zur Verfügung stehende Gesamtleistung auf alle Stromverbraucher ohne nachteilige Teillastabwürfe in einer Weise zu verteilen, daß die Funktion der Stromverbraucher im wesentlichen nicht geändert wird. Die bekannte Steuereinrichtung wäre z. B. zur Steuerung verschiedener Stromverbraucher einer Großkücke ungeeignet, weil nicht jeder Stromverbraucher — und wenn — nicht zu jeder Zeit vorübergehend ohne Rücksichtnahme auf seine Funktionsweise von der Stromzufuhr unterbrochen oder auf eine verringerte Leistungsaufnahme umgesteuert werden kann.

Es ist daher zu jedem Abfragezyklus ein Prioritätsschema neu festzulegen, das die Reihenfolge ausgesuchter Verbraucher bestimmt, nach der die Unterbrechung oder eingeschränkte Leistungsaufnahme an den ausgesuchten Verbrauchern der Reihe nach vorgenommen wird, bis die Gesamtleistungsentnahme unter einen gewählten Grenzwert gedrückt ist, ohne daß dadurch die Funktion der einzelnen Stromverbraucher beeinflußt wird bzw. die geänderte Funktionsweise zu wesentlichen Nachteilen führt.

Die DE-A-2 315 208 offenbart eine Steuerung für Stromverbraucher zur Begrenzung des Spitzenstrombedarfes. Hierbei wird vorausgesetzt, daß die einzelnen Stromverbraucher jeweils annährend dieselbe Leistungsabnahme aufweisen. Die bekannte Steuerung ist damit nur für Stromverbrauchergruppen geeignet, die aus gleichartigen Stromverbrauchern bestehen, z. B. mehrere elektrische Heizungskörper eines Haushaltes oder eines elektrischen Mehrplattenherdes. Sie ist dagegen nicht für eine Stromverbrauchergruppe geeignet. Eine Leistungsverteilung, die wenigstens einige Stromverbraucher enthält, welche unterschiedliche Leistungsaufnahmen benötigen. Eine Leistungsverteilung eines begrenzten Leistungsangebotes auf die einzelnen Stromverbraucher entsprechend ihren momentanen Leistungsbedürfnissen kann nicht vorgenommen werden.

Durch die noch bekanntgewordene FR-A-2 433 254 und die US-A-4 090 062 und US-A-4 216 384 sind weitere Stromverbraucher-Überwacheinrichtungen offenbart, die aber das Problem der Überwachung des Gesamtstromverbrauches gegenüber einer maximalen Grenzleistung weder aufzeigt noch nahelegt, wenn zu der zu überwachenden Stromverbrauchergruppe vor allem mehrere Verbraucher mit externen Stromanschlüssen und internen Steuer- bzw. Regelkreisen gehören, die zyklisch intern den Verbraucher vom Stromanschluß vorübergehend z. B. thermostatisch abschalten.

Der effektive Strompreis für eine Stromverbrauchergruppe setzt sich grundsätzlich aus dem sogenannten Arbeitspreis für jede abgenommene KWh und dem Leistungspreis zusammen, der die Energiebereitstellungskosten für das Energieversorgungsunternehmen (EVU) beinhalten. Bei mittleren und größeren Abnehmern elektrischer Energie rechnen die EVU's entweder nach dem Maximumtarif oder einem vertraglich festgelegten Sondertarif ab. Beim Maximumtarif richtet sich der Leistungspreis nach der Höhe des Maximums. Dies ist die höchste, über eine kurze Zeitspanne, z. B. 15 Minuten gemittelte Leistung, die im Abrechnungszeitraum erreicht wurde. Beim Abschluß eines Sondertarifvertrages wird nach bestimmten Regeln eine untere und obere Grenzleistung festgelegt, die der Abnehmer voraussichtlich nicht unter- bzw. überschreitet. Auch bei Unterschreitung der unteren Grenzleistung wird diese Grenzleistung in Rechnung gestellt, während bei Überschreitung der oberen Grenze für die Überschreitungsleistung eine zusätzliche Gebühr berechnet wird. Eine möglichst niedrige Festlegung der oberen Grenzleistung wirkt sich daher günstig auf den Leistungspreis aus. Jeder Stromabnehmer der privaten und öffentlichen Wirtschaft ist daher bestrebt, die abgenommene Energie für eine Stromverbrauchergruppe zu einem möglichst günstigen Tarif zu beziehen.

Aufgabe der Erfindung ist es, ein Verfahren gemäß dem Oberbegriff des Anspruches 1 anzugeben, das sicherstellt, daß bei Vorhandensein von Stromverbrauchern, welche über äußere Schalteinrichtungen an das Stromnetz angeschlossen sind, zusätzlich aber auch interne Steuer- oder Regelkreise aufweisen, die intern zyklisch eine zeitlich begrenzte Stromabschaltung vornehmen nach jedem Abfragezyklus zur Ermittlung des momentanen Gesamtstromverbrauches durch Nichteinschalten von einschaltbereiten Stromverbrauchern bzw. durch Abschaltung bestimmter eingeschalteter Stromverbraucher eine sonst drohende Überschreitung der maximalen Grenzleistung sicher vermieden wird. Außerdem soll sichergestellt sein, daß bei sich anzeigender wesentlicher Unterschreitung der maximalen Grenzleistung durch Wiedereinschalten vorher abgeschalteter Stromverbraucher oder auch neu in den Stromkreis einzuschaltender Stromverbraucher der Gesamtstromverbrauch möglichst nahe unterhalb der Grenzleistung gehalten werden kann.

"Zur Lösung dieser Aufgabe liegt der Erfindung der Gedanke zugrunde, daß in vielen Fällen zur Glättung von fluktuierenden Stromverbrauchsspitzen mit einer Prozesssteuerung vorzugweise in den Regelungs- bzw. Steuerkreis von unterbrechbaren und/oder auf veränderte Leistungsaufnahmen umsteuerbaren Stromverbrauchereinheiten vorübergehend eingegriffen werden kann, ohne dabei die Funktion der unterbrochenen bzw. umgesteuerten Stromverbraucher wesentlich zu beeinflussen. Besonders günstig verhalten sich dabei z. B. thermostatisierte Heiz-und Kühlaggregate aufgrund des thermischen Nachlaufeffektes. Die obere Grenzleistung läst sich mit der erfindungsgemäßen Prozesssteuerung um so niedriger einstellen, je größer der Anteil der unterbrechbaren und/oder leistungsumschaltbaren Stromverbrauchereinheiten und je kleiner das Verhältnis Ein-Ausschaltzeit ist. Vorteilhafterweise wird die obere Grenzleistung möglichst nahe an die während eines Stromverbrauchszeitraumes gemittelte Gesamtlastaufnahme herangelegt".

Diese Aufgabe wird erfindungsgemäß durch die kennzeichnenden Merkmale des Anspruches 1 gelöst.

Nach der Erfindung sind die einzelnen Stromverbraucher über 2 Meldeleitungen an den Rechner angeschlossen, der daher den jeweiligen Schalt- und Betriebszustand der Stromverbraucher kennt. Handelt es sich dabei z. B. um ein Heizgerät, d. h. um ein thermostatgesteuertes Gerät, so sind zwei Meldeleitungen vorgesehen, über die das Gerät an den Rechner angeschlossen ist. Das Gerät ist also zunächst nach außen hin über einen Ein/Ausschalter an das Stromnetz angeschlossen. Der externe Ein/Ausschalter ist über die erste Meldeleitung und der interne Thermostatschalter ist über die zweite Meldeleitung an den Rechner angeschlossen.

Bei jedem Abfragezyklus weiß also der Rechner über die Meldeleitungen, welcher der Stromverbraucher

4

extern von dem Stromnetz gerade abgeschaltet ist. Weiterhin weiß der Rechner, welche der gerade extern abgeschalteten Stromverbraucher intern noch ein- und welche intern bereits abgeschaltet sind. Erst hierdurch ist es erfindungsgemäß möglich, bei einem Abfragezyklus eine "drohende". Überschreitung der Grenzleistung sicher zu erkennen und z. B. einen gerade intern in der Einschaltphase befindlichen Stromverbraucher extern kurzzeitig auszuschalten, um dadurch die drohende Überschreitung der Grenzleistung sicher zu vermeiden. Entsprechendes gilt für das Zuschalten eines Stromverbrauchers. Hier wird vorteilhafterweise bevorzugt der Stromverbraucher dem Verbraucherstromkreis wieder zugeschaltet, der sich am längsten im internen Aus-Zustand, also an erster Stelle der Warteliste zum Wiedereinschalten befindet.

Erfindungsgemäß wird also auf vorteilhafte Weise in kurzen Zeitintervallen zyklisch der Schalt- und Betriebszustand sämtlicher angeschlossener Stromverbraucher überprüft. Dabei wird nach einem laufend neu berechneten Prioritätsschema zur Erniedrigung der erforderlichen Gesamtleistung unterhalb einer oberen Grenzleistung die Energieaufnahme jeweils nur solcher Verbraucher eine vorbestimmte Zeit lang unterbrochen oder verringert, bei denen ohne wesentliche Änderungen ihrer Funktionsweisen eine solche Unterbrechung oder Verringerung der Leistungsaufnahme auch zulässig ist, bzw. eine Änderung zum gegebenen Zeitpunkt ohne weiteres in Kauf genommen werden kann. Es wird somit vorteilhafterweise eine verringerte Gesamtenergieaufnahme durch eine Verteilung der verfügbaren Energie auf die einzelnen Verbraucher in einer Weise erreicht, daß dabei die Funktionsweisen der einzelnen Stromverbraucher in wesentlichen nicht beeinträchtigt werden.

Die Erfindung wird anhand eines Ausführungsbeispieles beschrieben, das in einer Zeichnung schematisch dargestellt ist. Hierin zeigt :

Figur 1 ein Steuerpult für 16 thermostatgesteuerte Stromverbraucher

Figur 2 ein Blockschaltbild zur Durchführung eines erfindungsgemäßen Verfahrens für die Überwachung des Gesamtstromverbrauches der 16 Stromverbraucher nach Fig. 1

Figur 3 eine Computersimulation für 16 Stromverbraucher bei Anwendung herkömmlicher Verfahren zur Überwachung des Gesamtstromverbrauches und

Figur 4 eine vergleichsweise Computersimulation fü 16 Stromverbraucher bei Anwendung des erfindungsgemäßen Verfahrens nach Fig. 1 und 2.

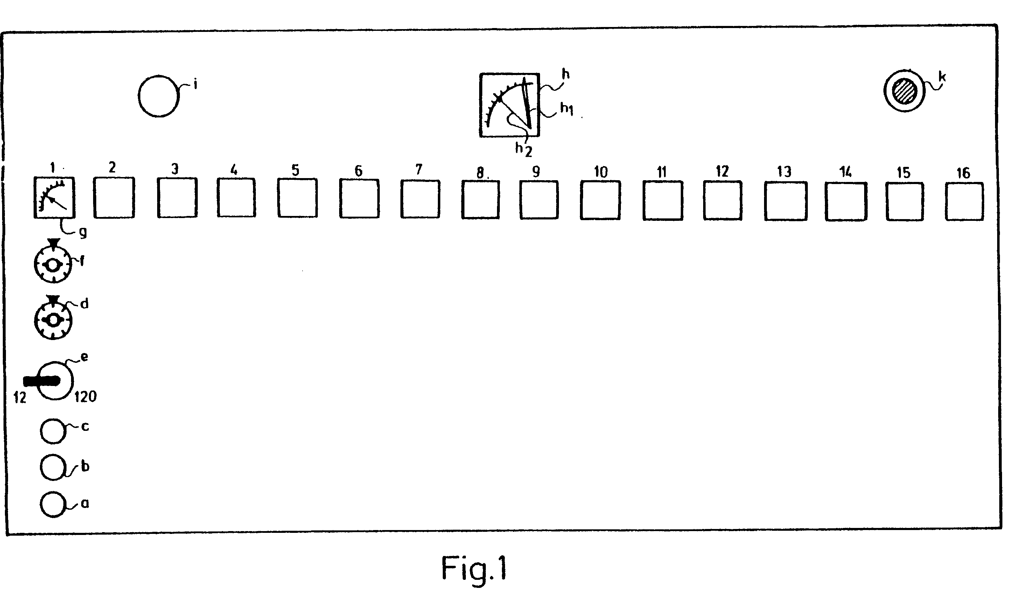

In Figur 1 sind die Bedienungs- und Anzeigelemente für jeden der 16 thermostatgesteuerten Stromverbraucher auf einem Steuerpult in 16 Spalten angeordnet, die durch die Ziffern 1 bis 16 gekennzeichnet sind. Die jeweils gleichen Bedienungs- und Signalisierungselemente sind der Einfachheit halber nur für den Stromverbraucher 1 dargestellt. Entsprechende Bedienungs- und Signalisierungselemente sind in der gleichen Anordnung auch für die anderen Stromverbraucher 2 bis 16 vorhanden.

Zu jedem Stromverbraucher gehört eine Start/Stop-Taste "a", eine rote Lampe "b" zur Signalisierung einer Stromunterbrechung des Stromverbrauchers, eine grüne Lampe "c" zur Signalisierung einer Einschaltung des Stromverbrauchers und ein erstes Potentiometer "d" in der Gestalt eines Drehknopfes zur Einstellung einer wählbaren ersten Heizdauer von 0 bis 120 Minuten oder einer wählbaren zweiten Heizdauer von 0 bis 12 Minuten. Ein Wählschalter zur Einschaltung der ersten oder zweiten Heizdauer ist mit "e" bezeichnet. Ein zweites Potentiometer "f" in der Gestalt eines weiteren Drehknopfes dient zur Einstellung der Heiztemperatur bis zu der der Stromverbraucher ohne eine Unterbrechung aufgeheizt werden soll und die während der Heizdauer im wesentlichen unverändert aufrechterhalten werden soll. Es ist klar, daß statt des Potentiometers "f" auch ein Programmschalter oder dergleichen Einstellvorrichtung vorhanden sein kann, mit dem ein bestimmter Temperaturverlauf während der eingestellten Heizdauer gewählt werden kann. Schließlich ist mit "g" eine Zeitanzeige gekennzeichnet, die jederzeit angibt, wie lange der betreffende Stromverbraucher noch in Betrieb ist. Ist die Betriebszeit abgelaufen, so wird ein nicht dargestellter akustischer Signalgeber eingeschaltet. Außerdem gibt die betreffende rote Lampe "b" Blinksignale ab.

Allen Stromverbrauchern übergeordnet ist ein Anzeigeinstrument "h", das die zur Verfügung stehende Restenergie anzeigt, die noch entnommen werden kann, ohne eine gewählte obere Grenze für die maximal entnehmbare Gesamtenergie pro Zeiteinheit zu übersteigen. Eine Warnlampe "i" in Verbindung mit einem weiteren nicht dargestellten akustischen Signalgeber zeigt eine Betriebsstörung an. Mit "k" ist ein Hauptschalter angedeutet, mit dem im Störungsfalle die gesamte Anlage zur erfindungsgemäßen Überwachung des Gesamtstromverbrauches der 16 Stromverbraucher abgeschaltet werden kann, so daß dann die einzelnen Stromverbraucher jeweils für nich im Handbetrieb weitergefahren werden können.

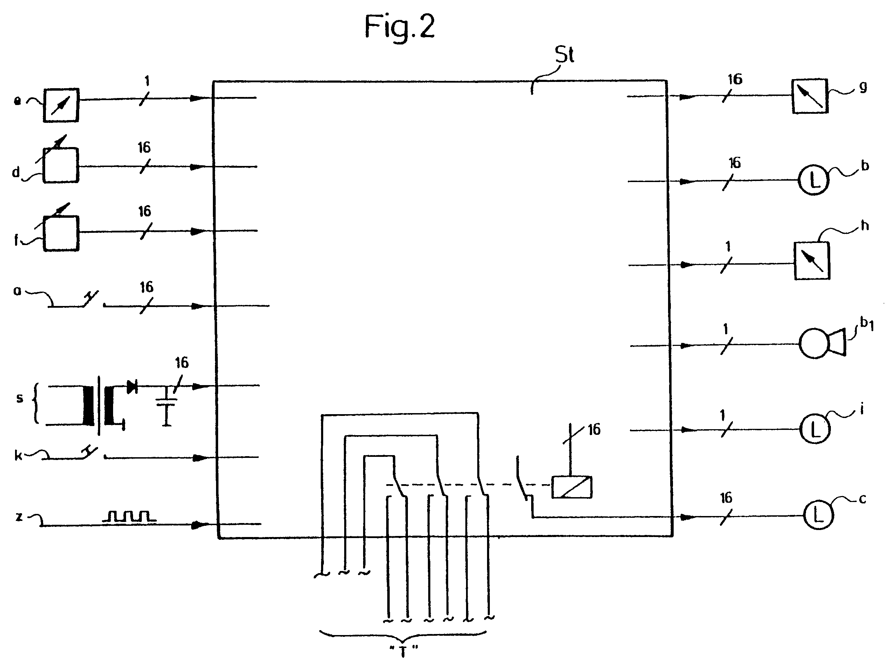

Figur 2 zeigt ein Blockschaltbild zur Durchführung des erfindungsgemäßen Verfahrens für beispielsweise 16 thermostatgesteuerte Stromverbraucher. Die hierzu verwendete elektronische Steuerung ist auf eine bestimmte maximale Leistungsentnahme einstellbar, die durch den Zeiger "$h_1$" des Anzeigeinstrumentes "h" angezeigt ist (Fig. 1). Der weitere Zeiger "$h_2$" zeigt die momentan durch die gerade eingeschalteten Stromverbraucher entnommene Gesamtenergie an. Der von den beiden Zeigern gebildete Winkel ist ein analoges Maß für die momentan noch zur Verfügung stehende Restenergie. Es ist klar, daß die Resternergie auch digital in

Ziffern angegebenen werden kann.

Es ist klar, daß die hier angedeuteten Bedienungs- und Signalisierungselemente auch in einer anderen Weise angeordnet sein können und daß die Zeitanzeige "g" und das Anzeigeelement "h" für die noch vorhandene Heizdauer und für die momentan noch zur Verfügung stehende elektrische Energie analoge oder digitale Anzeigen aufweisen können.

Figur 2 zeigt einen Steuerblock "St" für die 16 Stromverbraucher. Der Steuerblock weist 16 erste Analogeingänge zur Übernahme der an den Potentiometern "d" eingestellten einzelnen Heizdauern sowie 16 zweite Analogeingänge zur Übernahme der an den Potentiometern "f" eingestellten Heiztemperaturen. Weiterin besitzt die Steuereinheit einen Analogeingang "e" zur Übernahme der momentan abgenommenen Gesamtleistung. Statt dieses Analogeingangs für die Gesamtleistungsabnahme können auch 16 Analogeingänge für die jeweiligen Einzelleistungsabnahmen der eingeschalteten Stromverbraucher vorhanden sein.

Die Steuerung besitz weiterhin 16 Binäreingänge zur Übernahme der Start/Stop-Signale, die von den Start/Stop-Tasten "a" abgegeben werden, und 16 Binäreingänge zur Übernahme der geräteinternen Schaltzustände "s" der 16 Stromverbraucher, die mittels Thermoelementen oder Thermostaten abgeschaltet und beim Überschreiten einer unteren Temperaturgrenze wieder eingeschaltet werden. Schließlich besitz der Steuerblock "St" einen Binäreingang "z" zur Übernahme von Zeitimpulsen aus einer Zentrale. Statt einer Zeitimpulsvorgabe kann auch eine interne Uhr in dem Steuerblock "St" vorgesehen sein.

Außer den vorstehend aufgezählten Eingängen besitz der Steuerblock 16 Analogausgänge für die Zeitanzeige "g", 16 Ausgänge zur Ansteuerung der roten Lampen "b", 16 Analogausgänge zur Ansteuerung der grünen Lampen "c", 16 Ausgänge zur Ansteuerung der Schaltschütze bzw. der Tyristoren "T", über die die einzelnen Verbraucher ans Netz anschließar bzw. vom Netz abschaltbar sind, einen Analogausgang zur Anzeige der noch zur Verfügung stehenden Restenergie "h", einen Ausgang "$b_1$" zur akustischen und/oder optischen Anzeige, daß ein Stromverbraucher seinen Betriebszustand beendet hat und einen Ausgang "i" zur akustischen und/oder optischen Anzeige, daß die Anlage gestört ist. Jeder z. B. thermostatisierte Stromverbraucher ist mit zwei Eingangskanälen und einem Ausgangskanal an den Steuerblock "St" angeschlossen.

Die Steuerung am Beispiel von 16 Stromverbrauchern z. B. für eine Großkücke läuft wie folgt ab :

Die Stromverbraucher können über die Start-stop-Tasten "a" einzeln an den Stromkreis angeschlossen werden. Beim Drücken einer Start-stop-Taste "a" für einen Stromverbraucher darf dieser nur an den Stromkreis angeschlossen werden, wenn dadurch die vorgegebene obere Leistungsentnahmegrenze nicht überschritten wird. Hierzu vergleicht die Steuerung die erforderliche Leistungsentnahme für den betreffenden Stromverbraucher mit der bereits vorhandenen Leistungsentnahme der schon eingeschalteten Stromverbraucher und entscheidet, ob die erforderliche Leistungsentnahme durch kurzzeitige Stromunterbrechungen der bereits eingeschalteten Stromverbraucher für den neu zugeschalteten Stromverbraucher abgezweigt werden kann, sofern ohne solche Stromunterbrechungen bei einer Zuschaltung des Stromverbrauchers die gesetze obere Grenze der Leistungsentnahme überschritten werden würde.

Kann der Start eines Stromverbrauchers nicht sofort erfolgen, weil die von den eingeschalteten Stromverbrauchern gerade abzweigbare Energie nicht ausreichen würde, um den gestarteten Stromverbraucher ausreichend mit Strom zu versorgen, so nimmt die Steuereinheit den Stromverbraucher in Waterposition und zeigt dieses durch eine Ansteuerung der betreffenden roten Lampe "b" an. Kann dagegen der Start sofort erfolgen, weil die erforderliche Leistung direkt aus dem Netz oder durch Abzweigungen von den eingeschalteten Stromverbrauchern entnommen werden kann, so löst der Steuerblock "St" den Start automatisch aus und steuert die betreffende grüne Lampe "c" an, während ein Signal an der roten Lampe "b" verschwindet. Vor dem Start eines Stromverbrauchers sind durch die Protentiometer "d" und "f" seine Heizdauer und seine Heiztemperatur eingestellt. Die jeweils noch erforderliche Heizdauer wird durch die Zeitanzeige "g" angezeigt.

Die Steuerung signalisiert nach Ablauf der Heizdauer die Beendigung der Arbeit eines Stromverbrauchers, ohne ihn abzuschalten. Die zugehörige Zeitanzeige "g" steht dann auf Null. Die rote Lampe "b" und ein akustisches Warnsignal "$b_1$" geben zusätzlich zu der grünen Lampe "c" an, um eine Bedienungsperson darauf aufmerksam zu machen, daß der Koch- bzw. Backvorgang in dem betreffenden Stromverbraucher abgeschlossen ist und dieser abgeschaltet werden kann. Zur Abzweigung von Strom darf der Stromverbraucher von der Steuerung jetz nicht mehr in Anspruch genommen werden. Durch Betätigung der Start/Stop-Taste "a" wird der Stromverbraucher außer Betrieb genommen. Dabei gehen beide Lampen "b" und "c" aus und das Warnsignal "$b_1$" verschwindet. Anschließend ist die Start/Stop-Taste "a" für eine festzulegende kurze Zeit verriegelt, damit ein fehlerhafter Start für den gerade abgeschalteten Apparat sicher vermieden wird.

Die Steuerung ist so ausgebildet, daß das Zuschalten eines unterbrochenen Stromverbrauchers Vorrang hat vor dem Start eines neu zuzuschaltenden Stromverbrauchers. Eine Unterbrechung erfolgt durch die Steuerung automatisch dann, wenn ohne diese die gesetze obere Grenze der Leistungsentnahme überschritten werden würde. Diese Bedingung gilt nur für die thermostatisierten Stromverbraucher, nicht jedoch für solche elektrischen Küchengeräte, die keine interne Temperatursteuerung aufweisen, wie z. B. Rührwerke.

Vorteilhafterweise erfolgt die Unterbrechung von eingeschalteten Stromverbrauchern zur Abzweigung von Strom für wenigstens einen in den Stromkreis zugeschalteten Stromverbraucher zyklisch in 4 Stufen. Hierbei werden nur so viele Stromverbraucher kurzzeitig unterbrochen, bis die Forderung erfüllt ist, daß die Gesamtleistungsentnahme kleiner ist als die gewählte obere Grenzleistung. Zur Auswahl der eingeschalteten Stromverbraucher, die jeweils kurzzeitig unterbrochen werden können, werden diese von der Steuerung in rascher Aufeinanderfolge zyklisch abgetastet. Dabei werden die jeweiligen Situationsdaten der einzelnen Stromverbraucher abgefragt. In einer ersten Stufe werden diejenigen Stromverbraucher zyklisch abgefragt, die

a) keine interne Unterbrechungsverriegelung haben,

b) sich außerhalb der Anlaufzeit befinden,

c) noch nicht länger als eine gewählte maximale Gesamtzeit von $T_{max} = n \cdot \Delta t$ unterbrochen worden sind, wobei $\Delta t$ die gewählte Zeitspanne ist, die ein Stromverbraucher während einer Unterbrechung maximal unterbrochen ist, z. B. 30 sec oder 1 min. (n ist eine positive ganze Zahl, z. B. 4) und

d) sich aufgrund einer internen Temperatursteuerung nicht gerade in einem Ausbetrieb befinden.

Reicht die erste Stufe nicht aus, um durch von den eingesschalteten Stromabzweigungen Stromverbrauchern die benötigte Energie für wenigstens einen zuzuschaltenden Stromverbraucher zu erhalten, dann werden die eingeschalteten Stromverbraucher in einer zweiten Stufe unter den gleichen Kriterien wie in Stufe 1 erneut abgefragt, allerdings mit dem Unterschied, daß auch diejenigen Stromverbraucher unterbrochen werden, die noch nicht länger als eine gewählte maximale Gesamtzeit von $T_{max} = n \cdot \Delta t$ plus wahlweise ein oder mehrere zusätzliche Zeistpannen $m \cdot \Delta t$ unterbrochen worden sind. $\Delta t$ kann z. B. auf 60 sec eingestellt sein. Ist n = 4 gewählt, dann beträgt $T_{max}$ in der 1. Stufe maximal 4 Minuten und in der 2. Stufe maximal 6 Minuten, wenn m = 2 gewählt ist. Sind z. B. 14 Stromverbraucher eingeschaltet und kann ein 15. Stromverbraucher nur zugeschaltet werden, wenn genügend Strom für den 15. Stromverbraucher abgezweigt werden kann und lassen sich von diesen 14 Stromverbraucher in der 2. Stufe 10 Stromverbraucher jeweils eine Gesamtzeitspanne von etwa 6 min unterbrechen, dann kann der für den 15. Stromverbraucher benötigte Strom zusammen 60 min lang von 10 Stromverbrauchern abgezweigt werden, wobei sich die Heizdauer dieser 10 Stromverbraucher jeweils nur um etwa 6 Minuten verlängert, was in vielen Fällen nicht ins Gewicht fällt.

Reicht auch die 2. Stufe nicht aus, um die benötigte Energie von den eingeschalteten Stromverbrauchern abzugzweigen, so werden die eingeschalteten Stromverbraucher in einer 3. Stufe unter veränderten Kriterien erneut abgefragt und zwar werden alle diejenigen Stromverbraucher vom Stromanschluß kurzzeitig unterbrochen, die

a) keine interne Unterbrechungsverriegelung haben und

b) sich aufgrund einer internen Temperatursteuerung nicht gerade in einem Ausbetrieb befinden.

Das heißt, daß nunmehr auch diejenigen Stromverbraucher unterbrochen werden, die sich noch in der Anlaufzeit befinden und die schon eine Gesamtzeit von $T_{max} = (n + m) \cdot \Delta t$ (Stufe 2) unterbrochen worden sind. Es kann zweckmäßig sein, für die 3. Stufe eine neue obere Grenze für $T_{max}$ festzulegen, die z. B. 2 Minuten länger ist als in der 2. Stufe, so daß am Ende der 3. Stufe alle kurzzeitig unterbrechbaren Stromverbraucher etwa 8 Minuten lang vom Strom abgeschaltet worden sind.

Solte aber auch dann noch nicht die abzweigbare Energie ausreichen, um ein oder mehrere zugeschaltene Stromverbraucher ausreichend mit Strom versorgen zu können, ohne eine gewählte obere Stromentnahmegrenze zu überschreiten, dann werden in der 4. Stufe alle Geräte unterbrochen, aber mit Ausnahme derjenigen, die sich gerade im internen Ausbetrieb befinden, also aufgrund ihrer internen Temperatursteuerung gerade vom Strom abgeschaltet sind, weil sie eine obere Heiztemperatur überschritten haben.

Nach Beendigung eines 4-stufen Unterbrechungszyklus muß die Zeitspanne $T_{max} = n \cdot \Delta t$ gemäß Stufe 1 wieder hergestellt sein. Außerdem müssen für einen neuen Zyklus die Unterbrechungsverriegelungen nach a) und b) in Stufe 1 wieder wirksam sein.

Durch die Steuerung soll sichergestellt sein, daß alle Stromverbraucher etwa gleich lang unterbrochen werden. Das heißt, $T_{max}$ wird von Stufe zu Stufe erst dann erhöht, wenn alle Stromverbraucher, die keiner Unterbrechungsverriegelung unterliegen, ungefähr gleich lang unterbrochen worden sind. Um einen Stromverbraucher 5 Minuten lang zu unterbrechen, sind bei $\Delta t$ = 1 min nur im Extremfall fünf Unterbrechungen von je 1 min erforderlich. In der Regel erfolgt aber eine Unterbrechung nicht eine Minute lang, sondern nur einen Bruchteil hiervon, weil zwischenzeitig der auf eine bestimmte Temperatur angeheizte Stromverbraucher sich selbst abschaltet. Bei einer Gesamtunterbrechungszeit von 5 Minuten kann die Anzahl der hierzu vorgenommenen Unterbrechungen wesentlich höher als 5 min sein.

Die Signalisierung einer Unterbrechung kann z. B. dadurch erfolgen, daß jeweils die betreffende grüne Lampe "c" ausgeht und die zugehörige rote Lampe "b" angeht. Die Anzeige der Zeit bleibt bei der Unterbrechung stehen. Die Unterbrechung wird also nicht mitgerechnet.

Die Steuerung kann z. B. jede Sekunde einmal einen vollen Abfragezyklus durchlaufen, um feststellen zu können, welche der eingeschalteten Stromverbraucher kurzzeitig unterbrochen werden könnten. Je Abfragezyklus kann eine unterschiedliche Anzahl von Stromverbrauchern zur Unterbrechung geeignet sein, je nachdem, wie viele der Stromverbraucher sich gerade im internen Ausbetrieb befanden. So kann es vorkommen,
daß der benötigte Strom während eines Zyklus allein von den intern abgeschalteten Stromverbrauchern zur
Verfügung gestellt wird, so daß zusätzliche Unterbrechungen nicht erforderlich sind.

Nach dem Start eines Stromverbrauchers wird dieser solange nicht unterbrochen, bis die Anlaufzeit beendet ist. Es sei denn, die Stufe 3 und/oder 4 des vorstehend erwähnten mehrstufigen Unterbrechungszyklus
kommt zur Anwendung, was aber nur in Ausnahmefällen der Fall ist.

Es ist klar, daß der Steuerung ein Programmspeicher zugeordnet ist, dem die Anschlußwerte der Stromverbraucher und ihre Anlaufzeiten fest eingegeben sind. Außerdem sind Kennzeichen eingegeben, welcher
Stromverbraucher nicht unterbrochen werden darf.

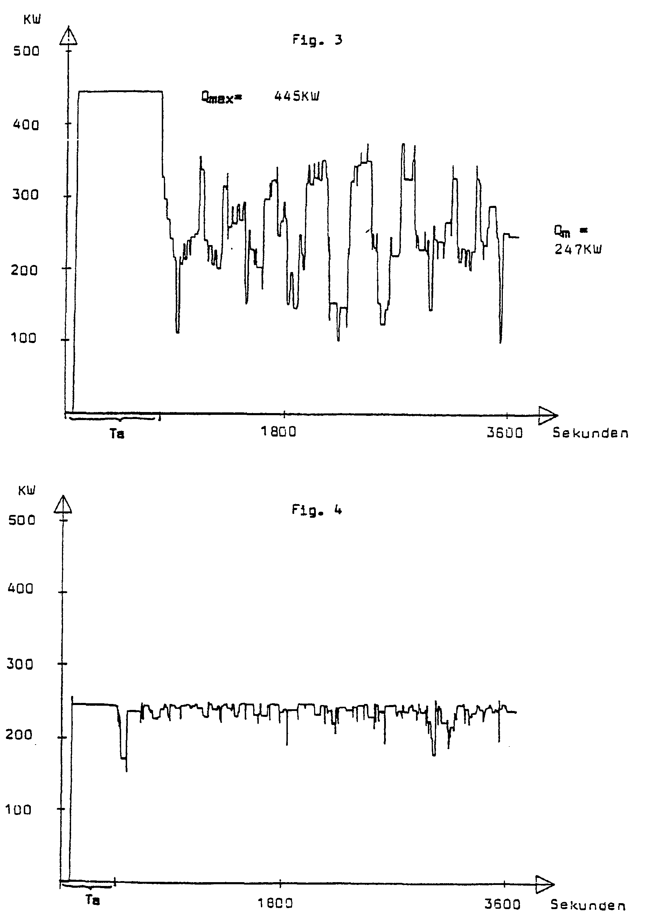

Figur 3 zeigt die Computersimulation einer herkömmlichen Steuerung für 16 Konvektoren mit unregelmäßiger Leistungsaufnahmme. Es ist erkennbar, daß ohne das erfindungsgemäße Verfahren nach Beendigung der
Anlaufphase sich ein statistich flukturierender Verlauf ergibt, der durch das unkontrollierte Ein- und Ausschalten
der 16 thermostatgesteuerten Stromverbraucher bedingt ist. In Fig. 3 sind die maximale Leistung $Q_{max} = 445$
KW bei gleichzeitigen Betrieb aller Geräte in der Anlaufphase Ta = 15 min und die in der Zeit von der 15. bis
60. Minute gemittelte Gesamtleistung $Q_m = 247$ KW ersichtlich.

Wie Figur 4 zeigt, ergibt sich bei Anwendung des erfindungsgemäßen Verfahrens ein wesentlich ruhigere
Verlauf der Leistungskurve über der Zeit, wobei die obere Grenzleistung bei $Q_m = 247$ KW eingestellt wurde.

Die Steuerung ist so auslegbar, daß die Einhaltung der gewählten Grenzleistung oberste Priorität hat. Die
aktuell verbrauchte Leistung und die jeweiligen Schaltzustände aller Stromverbraucher werden z. B. im Sekundentakt gemessen. Alle Abschaltvorgänge (von Hand oder durch Thermostat) werden durch zusätzliche Unterbrechung beantwortet.

Bei der Überprüfung sämtlicher Stromverbraucher im Sekundentakt können z. B. folgende unterscheidbare
Zustände auftreten :

1. Der Stromverbraucher ist aus dem Steuerkreis ausgeschaltet ;

2. der Stromverbraucher ist in den Steuerkreis eingeschaltet, aber vom eigenen Thermostat-Regelkreis
intern unterbrochen, also innerhalb des Steuerkreises im internen Ausbetrieb ;

3. der Stromverbraucher ist in den Steuerkreis eingeschaltet und weder vom eigenen Regelkreis noch vom
Steuerkreis unterbrochen, also im regulären Einschaltbetrieb und

4. der Stromverbraucher ist in den Steuerkreis eingeschaltet, aber vom Steuerkreis für die festgelegte
Unterbrechungszeitspanne unterbrochen, also im gesteuerten Ausschaltbetrieb.

Stromverbraucher im Zustand 4, sind zu einem früheren Zeitpunkt von der Steuerung unterbrochen und
in Wartezustand versetzt worden. Nach Ablauf einer bestimmten Unterbrechungszeit (z. B. 60 Sekunden) werden diese intern zunächst wieder wie zugeschaltete Stromverbraucher behandelt (Übergang von Zustand 4.
nach Zustand 3.). Ist die Grenzleistung noch nicht erreicht, werden die Zuschaltanforderungen der Stromverbraucher mit Übergängen von 4. nach 3. und von 2. nach 3. bis zum Erreichen der Grenzleistung befriedigt.
Ist dann noch Leistung frei, werden auch die übrigen, noch unterbrochenen Stromverbraucher wieder zugeschaltet. Neuzuschaltungen, Zustand 1. nach Zustand 3., werden nur dann zugelassen, wenn kein Stromverbraucher mehr im Zustand 4. ist und die Grenzleistung nicht überschritten wird.

Die bis zur Erreichung der Grenzleistung verfügbare Leistung kann z. B. nicht ausreichen, wenn Stromverbraucher zugeschaltet werden, deren Leistung in den von der Steuerung gemessenen Gesamtwert eingeht,
die jedoch nicht der Steuerung unterliegen. Hierbei kann es sich z. B. um Dauerverbraucher oder um Stromverbraucher mit Handbetrieb handeln oder es werden Geräte im Zustand 4. nach 3. übernommen. Die Steuerung muß dann entscheiden, welche der im Zustand 3. befindlichen Geräte unterbrochen werden müssen, um
die Leistung für die zugeschalteten Stromverbraucher zur Verfügung zu haben, ohne die Grenzleistung zu überschreiten und ohne die Funktion der Stromverbraucher wesentlich zu beeinträchtigen. Zu diesem Zweck wird
für jeden Stromverbraucher eine Prioritätenziffer berechnet, die über die Reihenfolge der Umterbrechung entscheidet. In die Prioritätenziffer können folgende, laufend auf dem neuesten Stand gehaltene Parameter eingehen :

1) Stromverbraucher in der Anheizphase ;

2) gesamte Zeitspanne seit dem Übergang eines Stromverbraucher vom Schaltzustand 2. nach Schaltzustand 3.;

3) gesamte Zeitspanne, in der sich ein Stromverbraucher im Schaltzustand 4. befindet ;

4) Verhältnis der gesamten Zeitspanne eines Stromverbrauchers im Schaltzustand 4. zur Gesamtzeit des
letzten Zyklus (Duty Cycle).

Durch entsprechende Gewichtung dieser Parameter läßt sich erreichen, daß alle Stromverbraucher gleichmäßig unterbrochen werden, daß sie außerdem erst nach einer gewissen Thermostatanlaufzeit unterbrechbar

8

sind und daß Stromverbraucher in der Anheizphase nur unterbrochen werden, wenn alle anderen Möglichkeiten erschöpft sind.

Mit dem erfindungsgemäßen Verfahren wird eine bestimmte wählbare Grenzleistung von den zu überwachenden Stromverbrauchern nicht überschritten. Wird die Grenzleistung erreicht, erfolgt keine Neuzuschaltung weiterer Stromverbraucher.

Droht dagegen eine Überschreitung der Grenzleistung durch selbsttätiges Zuschalten von z.B. thermostatisierten Stromverbrauchern, die sich im internen Ausbetrieb befanden (Schaltzustand 2.), muß der zusätzliche Leistungsbedarf durch Unterbrechung anderer Stromverbraucher ausgeglichen werden.

Die Funktionsfähigkeit der Steuerung wird durch Stromverbraucher nicht beeinträchtigt, die sich im Dauerbetrieb befinden und grundsätzlich nich unterbrechbar sind (Rührer). Die Funktionsfähigkeit der einzelnen Stromverbraucher, die der Steuerung unterliegen, wird außerdem durch gesteuerte Unterbrechungen nicht wesentlich gestört.

Die Unterbrechung der Stromverbraucher, um Leistung für zuzuschaltende Stromverbraucher zur Verfügung zu haben, kann auch in nachstehender Reihenfolge erfolgen, wobei die Unterbrechung in der Regel z. B. 1 Minute beträgt :

1) Thermostatisierte Stromverbraucher mit der kürzesten Gesamtunterbrechungszeit, frühestens nach Ablauf von 1 Minute nach dem er sich selbsttätig eingeschaltet hat ;

2) Nicht-thermostatisierte Verbraucher ;

3) Verbraucher in der Anlaufphase ;

4) Thermostatisierte Verbraucher, die sich selbsttätig eingeschaltet haben, wobei die Einschaltzeit kürzer als 1 Minute ist.

Das erfindungsgemäße Verfahren ist überall dort mit Vorteil anwendbar, wo eine größere Anzahl von Stromverbrauchern gleichzeitig eingeschaltet sein müssen, von denen wiederum mehrere sich ohne wesentlichen Nachteil kurzzeitig vom Stromanschluß unterbrechen oder auf verringerte Leistungsabnahme umsteuern lassen und wobei durch die kurzzeitigen Unterbrechungen ohne Erhöhung der Gesamtstromentnahme eine solche Strommenge abgezweigt werden kann, daß mit dieser wenigstens ein zusätzlicher Stromverbraucher betrieben werden kann.

Für kurzzeitige Stromunterbrechungen eignen sich besonders thermostatisierte Stromverbraucher, wie z. B. Herde, Öfen, Konvektoren, Heiz- und Kühlaggregate.

Die Stromunterbrechung pro Stromverbraucher und pro Unterbrechung kann, wie gesagt, z. B. maximal 60 sec betragen. Es kann mitunter aber auch vorteilhaft sein, die maximale Unterbrechungszeitspanne kürzer als eine Minute zu wählen.

## Patentansprüche

1. Verfahren zur rechnergesteuerten Überwachung des auf eine einstellbare maximale Grenzleistung beschränken Gesamtstromverbrauches einer Gruppe von an ein Stromnetz angeschlossenen einzelnen Stromverbrauchern, von denen wenigstens einige vorübergehend abschaltbar oder auf verringerte Leistungsentnahme umsteuerbar sind, wobei zur Begrenzung der Gesamtleistungsaufnahme der Stromverbrauchergruppe auf einen Wert unterhalb der Grenzleistung die jeweils vorhandene Leistungsaufnahme der einzelnen Stromverbraucher periodisch gemessen und die Summe der gemessenen Leistungsaufnahmen mit der Grenzleistung verglichen wird und wobei ein den Grenzwert übersteigender oder wesentlich unterschreitender Gesamtstromverbrauch durch Ab- oder Zuschaltung oder leistungsverringernde bzw. leistungserhöhende Umsteuerung eines oder mehrerer ausgewählter Stromverbraucher möglichst nahe an die Grenzleistung herangeführt wird und wobei die Stromverbraucher jeweils über einen Ein/Ausschalter an das Stromnetz angeschlossen sind, dadurch gekennzeichnet, daß der

a) zur Übermittlung jeweiligen Schalt- und Betriebszustände der Stromverbraucher ihre Ein/Ausschalter jeweils über eine erste Meldeleitung und ihre internen Regel- oder Steuerkreise zur zyklischen Regelung oder zur Steuerung der Leistungsaufnahme der Stromkreisverbraucher jeweils über eine zweite Meldeleitung an den Rechner angeschlossen sind.

b) in jeder Meßperiode die Stromverbraucher nach ihren momentanen Schalt- und Betriebszuständen und nach ihren momentanen Leistungsaufnahmen abgefragt werden,

c) für jeden internen Stromverbraucher eine momentan gültige Zu- bzw. Abschalt-Prioritätsziffer ermittelt wird,

d) eine momentan zu erwartende Überschreitung der Grenzleistung durch eine prioritätsorientierte Unterbrechung oder Umsteuerung wenigstens eines unterbrechbaren bzw. umsteuerbaren Stromverbrauchers für eine festgelegte Zeitspanne vermieden wird und daß

9

e) die Leistungsdifferenz zwischen der Grenzleistung und einer momentan zu erwartenden wesentlichen Unterschreitung der Grenzleistung durch prioritätsorientiertes Zuschalten an wenigstens einen unterbrochenen oder umsteuerbaren Stromverbraucher vergeben wird.

2. Verfahren nach Anspruch 1, dadurch gekennzeichnet, daß die intern zyklisch geregelten oder umsteuerbaren Stromverbraucher thermostatgesteuert sind.

## Claims

1. Process for computerised supervision of the total consumption, restricted to an adjustable maximum power limit, of a group of individual electricity consumers which are connected to a mains supply and of which at least some are capable of being switched off temporarily or changed-over to reduced power input, where for limiting the total power input of the consumer group to a value below the power limit the then obtaining power input of the individual consumers is periodically measured and the sum of the measured power inputs is compared with the power limit, and a total consumption going beyond or substantially below the limit value is brought as close as possible to the power limit by the cutting-out or connecting-in of, or the power-reducing or power-increasing changing over of, one or more selected consumers, and the consumers being respectively connected with the mains supply by means of an on and off switch, **characterized** in that

a) for transmitting the respective control and operating states of the consumers their on and off switches are respectively connected via a first information wire and their internal regulating and control circuits are respectively connected via a second information line with the computer for cyclical regulation or for control of the power uptake of the circuit consumers.

b) in each measuring period the consumers are interrogated with regard to their instantaneous control and operating states and their instantaneous power inputs,

c) for each internal consumer a momentarily valid connecting or disconnecting priority number is ascertained,

d) an instantaneously expected exceeding of the power limit is obviated by a priority-orientated interruption or changing-over of at least one interruptable or level-changeable consumer for a fixed period of time, and that

e) the power difference between the power limit and an instantaneously expected substantial undershooting of the power limit is eliminated by priority-orientated connecting-in to at least one consumer which has been interrupted or which is capable of being changed-over.

2. Process according to claim 1, characterized in that the internally cyclically controlled or changeable consumers are thermostatically controlled.

## Revendications

1. Procédé pour effectuer au moyen d'un ordinateur la surveillance de la consommation totale de courant électrique d'un groupe d'appareils de consommation raccordés à un réseau : cette surveillance s'effectuant par rapport à une valeur-limite réglable de la consommation, et au moins certains des appareils considérés pouvant être temporairement débranchés ou mis temporairement en régime de consommation réduite ; cette surveillance, en vue de limiter la consommation d'ensemble des appareils à une valeur inférieure à la consommation limite, consistant à mesurer périodiquement la consommation unitaire instantanée de chacun des appareils consommateurs, pour comparer à la consommation-limite la somme des valeurs ainsi trouvées pour les consommations unitaires ; après quoi on ajuste d'aussi près que possible à la valeur-limite de la consommation le fonctionnement de l'ensemble, si la valeur trouvée pour la consommation totale dépasse la valeur-limite ou est nettement inférieure à celle-ci, en débranchant ou en branchant au moins un appareil consommateur choisi à cet effet, ou en modifiant en moins ou en plus le régime de consommation de cet appareil, les appareils consommateurs de courant étant reliés chacun au circuit d'alimentation par l'intermédiaire d'un conjoncteur-disjoncteur ; ce procédé étant caractérisé en ce qu'il comporte les phases opératoires suivantes :

a) afin de connaître à chaque instant l'état de commutation et le régime de fonctionnement de ces appareils consommateurs de courant, on relie à l'ordinateur de commande le conjoncteur-disjoncteur de chaque appareil par une première ligne d'information, et le circuit interne de régulation ou de commande, prévu pour assurer de manière cyclique ou par asservissement le réglage du régime de consommation de chaque appareil consommateur par une seconde ligne d'information ;

b) on interroge les appareils consommateurs de courant au cours de chaque période de mesure, pour connaître leur état instantané de commutation, leur régime instantané de fonctionnement, et la valeur instantanée de leur consommation ;

c) pour chaque appareil consommateur de courant interne, on fixe un ordre de priorité de valeur instantanée pour le branchement et le débranchement de l'appareil considéré ;

d) on évite un dépassement de la consommation-limite qui semble devoir être temporaire, en effectuant, pour un laps de temps de durée déterminée et d'après les priorités fixées, le débranchement ou le passage en régime de consommation réduite d'au moins un appareil consommateur de courant prévu pour pouvoir être débranché ou mis en régime de consommation réduite ;

e) on compense la différence constatée, entre la valeur-limite de la consommation d'ensemble et une valeur nettement inférieure de cette consommation qui semble devoir être temporaire, en effectuant d'après les priorités fixées le branchement d'au moins un appareil consommateur précédemment débranché ou mis en régime de consommation réduite.

2. Procédé selon la revendication 1, caractérisé en ce que les appareils consommateurs, pourvus d'un circuit interne de régulation cyclique ou de mise en régime de consommation réduite, sont régulés au moyen d'un système à thermostat.

Fig.1

# Fig.2

EP 0 053 383 B2

KW

500

400

Fig. 3

$Q_{max}=$ 445KW

300

200

$Q_m =$
247KW

100

Ta          1800          3600     Sekunden

KW

500

400

Fig. 4

300

200

100

Ta          1800          3600     Sekunden